(19) Europäisches Patentamt
European Patent Office
Office européen des brevets

(11) EP 3 168 363 A1

(12) EUROPÄISCHE PATENTANMELDUNG

(43) Veröffentlichungstag:
17.05.2017 Patentblatt 2017/20

(51) Int Cl.:
D21H 27/26 (2006.01)          D21H 17/54 (2006.01)
D21H 17/56 (2006.01)

(21) Anmeldenummer: 15194305.7

(22) Anmeldetag: 12.11.2015

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: Interprint GmbH
59759 Arnsberg (DE)

(72) Erfinder:
• Suur-Nuuja, Kimmo
  59755 Arnsberg (DE)
• Witte, Frank
  59823 Arnsberg (DE)
• David, Robert
  59494 Soest (DE)

(74) Vertreter: Brune, Axel et al
Fritz Patent- und Rechtsanwälte
Partnerschaft mbB
Postfach 1580
59705 Arnsberg (DE)

(54) **VERFAHREN ZUR HERSTELLUNG EINES IMPRÄGNATS UND EINES VERBUNDWERKSTOFFS, SOWIE VERWENDUNG VON POLYURETHAN ALS IMPRÄGNIERUNGSMITTEL**

(57) Verfahren zur Herstellung eines Imprägnats (4) mit einer minimalen Spannweite der Größenänderung aus einem Dekorpapier (1), wobei das Dekorpapier (1) mit einem Polyurethan als Imprägnierungsmittel imprägniert wird, sowie Verfahren zur Herstellung eines Imprägnats (4) mit einer verbesserten Elastizität aus einem Dekorpapier (1), wobei das Dekorpapier (1) mit einem Polyurethan als Imprägnierungsmittel imprägniert wird, sowie Verfahren zur Herstellung eines Verbundwerkstoffs (10), insbesondere für die Außenanwendung, wobei die gemäß mindestens einem der Ansprüche 1 bis 9 hergestellten Imprägnate (4) mit einem Träger (8), beispielsweise einem Phenolharzkern, verpresst werden, sowie Verwendung eines Polyurethans als Imprägnierungsmittel für die Imprägnierung eines Dekorpapiers (1) zur Minimierung der Spannweite des Papierwachstums des Imprägnats (4), sowie Verwendung eines Polyurethans als Imprägnierungsmittel für die Imprägnierung eines Dekorpapiers (1) zur Verbesserung der Elastizität des Imprägnats (4).

Fig. 1

EP 3 168 363 A1

**Beschreibung**

Die vorliegende Erfindung betrifft ein Verfahren zur Herstellung eines Imprägnats mit minimierter Spannweite der Größenänderung aus einem Dekorpapier gemäß dem Oberbegriff des Anspruchs 1, sowie ein Verfahren zur Herstellung eines Imprägnats mit einer verbesserten Elastizität aus einem Dekorpapier gemäß dem Oberbegriff des Anspruchs 5, ein Verfahren zur Herstellung eines Verbundwerkstoffs gemäß Anspruch 10, die Verwendung eines Polyurethans für die Imprägnierung eines Dekorpapiers zur Minimierung der Spannweite der Größenänderung des Imprägnats gemäß Anspruch 11, sowie die Verwendung eines Polyurethans für die Imprägnierung eines Dekorpapiers zur Verbesserung der Elastizität des Imprägnats gemäß Anspruch 12.

Zur Herstellung von Imprägnaten für die Holzwerkstoffindustrie werden bedruckte oder nicht bedruckte Dekorpapiere gemäß dem Stand der Technik mit Melaminharzen oder Urea-Harnstoffharzen oder Mischungen daraus imprägniert. Nach dem Imprägnieren und der sich daran anschließenden Trocknung sind die Imprägnate gewachsen. Das Wachstum beträgt in Querrichtung typischerweise 1,6%, in Längsrichtung 0,4%. Als Ursache wird allgemein das Quellen der Papierfasern durch die Aufnahme des Harzes angenommen.

Die realen Wachstumswerte streuen jedoch deutlich. So kann ein Imprägnat, das heute ein Querwachstum von beispielsweise 1,6% hat bei nur leicht veränderten Einstellungen der Harzrezeptur oder Maschinenparametern wie Bahnspannung oder Imprägniergeschwindigkeit auch Werte zwischen 1,5% und 1,7% haben.

Noch schwieriger wird die Situation, wenn mit einer neuen Papieranfertigung als zu imprägnierendes Dekorpapier gearbeitet werden muss. Dann streut das Wachstum in einem Bereich zwischen 1,3% bis 1,9%. Man versucht dann das Wachstum in einem gewissen Maß vorauszuberechnen, indem ein sogenannter Mütek-Wert gemessen wird. Dabei wird ein aus einer definierten Position in der Papierbahn entnommener Streifen in Wasser getaucht und das Wachstum durch die Aufnahme des Wassers gemessen. Als Faustregel gilt, dass die Hälfte des Mütek-Wertes dem realen Papierwachstum entsprechen wird.

Die Dimensionierung eines Pressblechs für die Weiterverarbeitung des Imprägnats ist jedoch vorgegeben. Es werden nun Papierrollen entsprechend ihres Mütek-Wertes aus einer Fertigung ausgewählt, damit das vorausberechnete Papierwachstum dem Pressblech angepasst ist. Das reale Wachstum entspricht aber nicht immer dem erwarteten Wachstum. Bei einer Papierbahnbreite von 2 m entspricht eine Spannweite von 0,4% bereits einer Ungewissheit der Papierbahnbreite von 8mm. Dies ist für zahlreiche Anwendungen kritisch oder zu viel.

Aus der EP 2 907 655 A1 ist zwar ein mit Polyurethan imprägniertes Zellstoffpapier bekannt, welches eine Dekorschicht innerhalb eines elastischen Bodenbelages bildet. Die Dimensionsstabilität des Bodenbelages wird hier durch den Zusatz einer Glasfasermatte sichergestellt. Durch die Fixierung mit der Glasfasermatte verändert das Papier seine Dimension nicht.

Hier setzt die vorliegende Erfindung an und macht es sich zur Aufgabe ein Verfahren zur Herstellung eines Imprägnats mit minimierter Spannweite der Größenänderung aus einem Dekorpapier vorzuschlagen.

Erfindungsgemäß wird dies dadurch erreicht, dass das Dekorpapier mit einem Polyurethan imprägniert wird. Es hat sich gezeigt, dass bedruckte und nicht bedruckte Dekorpapiere nicht wachsen, wenn sie mit Polyurethanen imprägniert werden. Derartig imprägnierte Imprägnate schrumpfen in Querrichtung um ca. 1%. Es hat sich ferner gezeigt, dass die Spannweite der Größenänderung minimal und insbesondere unabhängig von den Maschineneinstellungen und der Papierfertigung ist.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung des vorgeschlagenen Verfahrens kann vorgesehen sein, dass die Spannweite der Größenänderung des Imprägnats geringer als 0,3%, bevorzugt geringer als 0,2%, besonders bevorzugt geringer als 0,1% ist. Hierdurch kann ein Imprägnat bereitgestellt werden, welches vorteilhaft weiterverarbeitet werden kann, insbesondere da es hinsichtlich seiner Abmessungen sehr genau an nachfolgende Verfahrensschritte, wie beispielsweise das Verpressen mit einem Pressblech, angepasst werden kann.

In einer vorteilhaften Ausgestaltung des vorgeschlagenen Verfahrens kann vorgesehen sein, dass die Größenänderung des Imprägnats als Schrumpfung der Bahnbreite des Dekorpapiers ausgebildet ist, wobei die Schrumpfung maximal zwischen -0,9 und -1,1% beträgt.

Neben der Größenänderung im Hinblick auf die Bahnbreite kann in einer vorteilhaften Ausgestaltung des vorgeschlagenen Verfahrens vorgesehen sein, dass die Größenänderung als Änderungsprofil des Dekorpapiers ausgebildet ist, wobei das Änderungsprofil zwischen - 0,9 und -1,1% beträgt.

Eine weitere Aufgabe der vorliegenden Erfindung liegt darin, ein Verfahren zur Herstellung eines Imprägnats mit einer verbesserten Elastizität aus einem Dekorpapier vorzuschlagen. Erfindungsgemäß wird diese Aufgabe dadurch gelöst, dass das Dekorpapier mit einem Polyurethan imprägniert wird. Die mit einem Polyurethan imprägnierten Dekorpapiere, sprich die Imprägnate, zeichnen sich zudem durch eine höhere Elastizität z.B. beim Biegen aus im Vergleich zu herkömmlichen Imprägnaten. Es kommt insbesondere nicht zu einem Aufbrechen von Papierfasern. Auch sehr tiefe Strukturen können in die Imprägnate gepresst werden.

In einer vorteilhaften Ausgestaltung des vorgeschlagenen Verfahrens kann vorgesehen sein, dass das Imprägnat dazu eingerichtet ist, mit einem Biegeradius von kleiner 5cm, insbesondere kleiner 1cm und weiter vorzugsweise kleiner 2,5mm aufgewickelt zu werden. Hierdurch ist das Imprägnat auch für anspruchsvolle Anforderungen geeignet, beispielsweise für Strukturen bzw. Träger mit vielen steilen Kanten, etc.

Weitere vorteilhafte Ausgestaltungen der vorgeschlagenen Verfahren ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Verfahren kann vorgesehen sein, dass es sich bei dem Polyurethan um eine aliphatische polykarbonalthaltige Polyurethandispersion handelt. Eine aliphatische polykarbonathaltige Polyurethandispersion zeichnet sich durch ihre hohe Transparenz und Lichtechtheit aus. Ihre Viskosität lässt sich durch einfache Zusätze gezielt so einstellen, dass das Imprägniermittel auf die Eigenschaften des verwendeten Dekorpapiers, die Verarbeitungsbedingungen und die angestrebten Eigenschaften des Imprägnats eingestellt werden kann.

In einer weiteren vorteilhaften Ausgestaltung der Verfahren kann vorgesehen sein, dass das Dekorpapier während der Imprägnierung mit Korund beaufschlagt wird. Hierdurch kann die Abriebfestigkeit erhöht werden, wodurch wiederum das hergestellte Imprägnat als Imprägnatfilm zur Herstellung von Laminatfußböden geeignet ist.

In einer weiteren vorteilhaften Ausgestaltung der Verfahren kann vorgesehen sein, dass das Imprägnat mit einem Lack geschützt wird. Es kommen beispielsweise Polyurethanlacke, elektronenstrahlhärtende Lacke und säurehärtende Lacke in Frage. Die Lacke können weitere Gebrauchseigenschaften dem Imprägnat mitgegeben, wie eine Anti-Fingerabdruckeigenschaft.

Eine weitere Aufgabe der vorliegenden Erfindung liegt darin, ein Verfahren zur Herstellung eines Verbundwerkstoffs vorzuschlagen. Erfindungsgemäß wird diese Aufgabe durch ein Verfahren mit den kennzeichnenden Merkmalen des Anspruchs 10 gelöst. Die vorzugsweise lackierten Imprägnate sind nach dem Verpressen mit einem Träger, beispielsweise einem Phenolharzkern, insbesondere für eine Außenanwendung geeignet.

Eine weitere Aufgabe der vorliegenden Erfindung liegt darin, die Verwendung eines Imprägniermittels für ein Dekorpapier vorzuschlagen, welches eine minimale Spannweite der Größenänderung eines mit diesem Imprägniermittel imprägnierten Dekorpapiers ermöglicht.

Erfindungsgemäß wird diese Aufgabe dadurch gelöst, dass ein Polyurethan als Imprägniermittel verwendet wird.

Eine weitere Aufgabe der vorliegenden Erfindung liegt darin, die Verwendung eines Imprägniermittels für ein Dekorpapier vorzuschlagen, welches die Elastizität des Imprägnats verbessert.

Erfindungsgemäß wird diese Aufgabe dadurch gelöst, dass ein Polyurethan als Imprägniermittel verwendet wird.

In einer vorteilhaften Ausgestaltung der Verwendung kann vorgesehen sein, dass eine aliphatische polykarbonalthaltige Polyurethandispersion als Polyurethan verwendet wird. Eine aliphatische polykarbonathaltige Polyurethandispersion zeichnet sich durch ihre hohe Transparenz und Lichtechtheit aus. Ihre Viskosität lässt sich durch einfache Zusätze gezielt so einstellen, dass das Imprägniermittel auf die Eigenschaften des verwendeten Dekorpapiers, die Verarbeitungsbedingungen und die angestrebten Eigenschaften des Imprägnats eingestellt werden kann.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen

Fig. 1    eine schematische Darstellung der Herstellung eines Imprägnats aus einem Dekorpapier;

Fig. 2    eine schematische Darstellung der Herstellung eines Imprägnats aus einem Dekorpapier mit weiteren möglichen Verfahrensschritten;

Fig. 3    eine schematische Darstellung der Herstellung eines Verbundwerkstoffs aus einem Imprägnat und einem Träger;

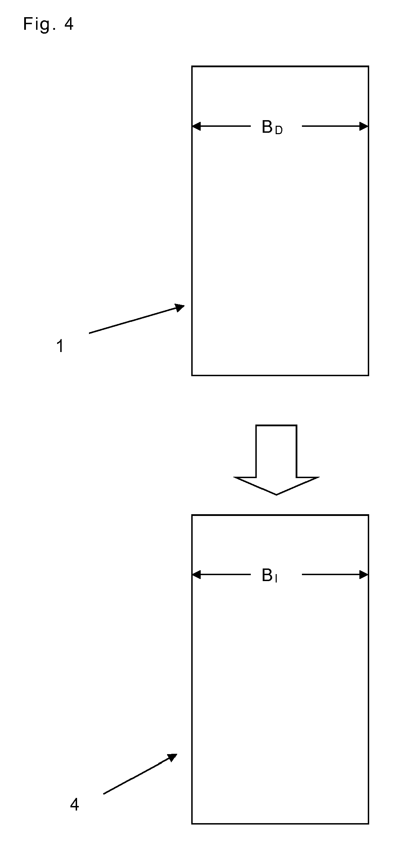

Fig. 4    eine schematische Darstellung eines Dekorpapiers und eines Imprägnats mit eingezeichneten Papierbahnbreiten;

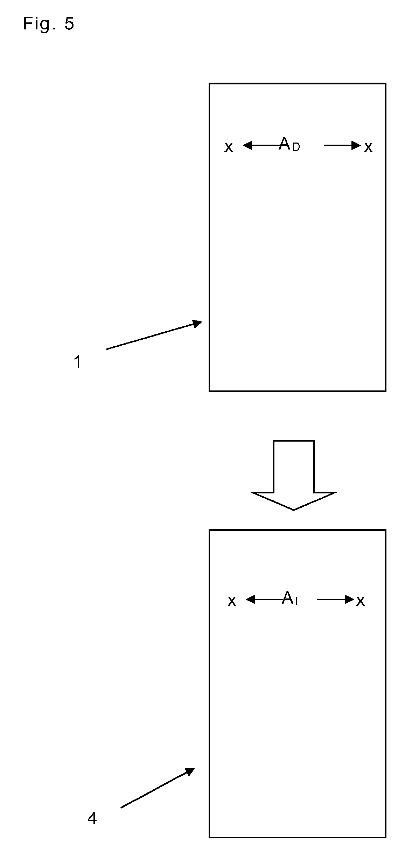

Fig. 5    eine schematische Darstellung eines Dekorpapiers und eines Imprägnats mit eingezeichneten Kreuzen für den Rastermaßtest.

Folgende Bezugszeichen werden in den Abbildungen verwendet:

1    Dekorpapier
2    Auftragsvorrichtung für Imprägniermittel
3    Trocknung

| 4 | Imprägnat |
| 5 | Auftragsvorrichtung für Korund |
| 6 | Auftragsvorrichtung für Lack |
| 7 | Auftragsvorrichtung für Overlaypapier |
| 8 | Trägermaterial |
| 9 | Presse |
| 10 | Verbundwerkstoff |

Bei einem für das erfindungsgemäße Verfahren bzw. die erfindungsgemäße Verwendung benutzten Dekorpapier 1 handelt es sich um ein Spezialpapier, welches eine besonders gute Formation und Dimensionsstabilität aufweist. Ferner weist das Dekorpapier eine besonders gute Imprägnierungsmittelaufnahmefähigkeit und Festigkeit auf. Es kann ein bedrucktes oder unbedrucktes Dekorpapier 1 zu Herstellung eines Imprägnats 4 verwendet werden. Das Dekorpapier 1 liegt in der Regel als Dekorpapierbahn vor, die von einer Rolle abgewickelt wird.

Zur Herstellung eines Imprägnats 4 aus dem Dekorpapier 1, wird das Dekorpapier 1 erfindungsgemäß mit einem Polyurethan als Imprägnierungsmittel imprägniert. Unter Imprägnierung soll grundsätzlich eine durchtränkende Behandlung von festen porösen Stoffen, wie in diesem Falle Papier, mit gelösten, emulgierten oder dispergierten Substanzen, den Imprägnierungsmitteln, verstanden werden. Anschließend wird das imprägnierte Dekorpapier getrocknet, wodurch im Wesentlichen die Lösungsmittel des Imprägnierungsmittels verdunsten. Es entsteht das Imprägnat 4. Das Lösungsmittel ist in aller Regel Wasser. Das Polyurethan ist entsprechend in Wasser dispergiert. Durch die Menge des Wassers und Verdicker ist es möglich, die Viskosität einzustellen. Das Polyurethan wird nach dem Eindringen in das Dekorpapier getrocknet. Beim Verpressen wird das Polyurethan unter der höheren Hitze zunächst wieder flüssig, nimmt daher die Form des Pressblechs an und kondensiert dann zu der Oberfläche. Dabei gibt es in der Regel keine Größenänderung mehr.

Das Imprägnat erfährt gegenüber dem Dekorpapier eine Größenänderung, insbesondere eine Schrumpfung. Mit anderen Worten, ein mittels Polyurethan imprägniertes Dekorpapier ist nach dem Trocknen gegenüber dem ursprünglichen Dekorpapier geschrumpft.

Die Größenänderung kann auf unterschiedliche Weise gemessen bzw. dargestellt werden. Es kommt beispielsweise die Änderung der Papierbahnbreite oder das sogenannte Änderungsprofil in Frage, welches durch den sogenannten Rastermaßtest bestimmt wird.

Ausgehend von einer Dekorpapierbahn, ist aus technischen Aspekten vornehmlich die Papierbahnbreite und entsprechend die Änderung der Papierbahnbreite von Bedeutung. Insofern kann unter Größenänderung G nachfolgend insbesondere die Änderung der Papierbahnbreite zwischen Dekorpapier und Imprägnat verstanden werden. Demnach $G = B_I - B_D$.

$B_I$    Breite des Imprägnats
$B_D$    Breite des Dekorpapiers

Die Größenänderung kann in Prozent ausgedrückt werden als $G\% = ((B_I - B_D) / B_D) * 100$.

Es hat sich gezeigt, dass die mit dem erfindungsgemäßen Verfahren hergestellten Imprägnate nach der Trocknung um etwa -0,9 bis -1,1 %, vorzugsweise um etwa -1% hinsichtlich ihrer Bahnbreite geschrumpft sind.

Bei einem Rastermaßtest zur Bestimmung des Änderungsprofils werden Kreuze auf das Dekorpapier gedruckt und diese nach dem Imprägnieren noch einmal gemessen. Daraus lässt sich das

Änderungsprofil, insbesondere die Abstandsänderung der Kreuze ableiten. Der Rastermaßtest berücksichtigt insbesondere, dass das Schrumpfen in der Regel nicht homogen entlang der Papierbahnbreite geschieht. Darüber hinaus kann das Änderungsprofil auch von den Parametern der Papierherstellung und der Papiermaschine abhängen.

Die Abstandsänderung A beträgt demnach $A = K_I - K_D$.

$K_I$    Abstand der Kreuze auf dem Imprägnat
$K_D$    Abstand der Kreuze auf dem Dekorpapier

Die Abstandsänderung kann in Prozent ausgedrückt werden als $A\% = ((K_I - K_D) K_D) * 100$.

Nachfolgend soll an einer beispielhaften Gegenüberstellung von herkömmlich hergestelltem Imprägnat und erfindungsgemäß hergestelltem Imprägnat anhand des oben skizzierten Rastermaßtests näher dargestellt werden.

Die einzelnen Beispiele beziehen sich auf Rollen von Dekorpapier bzw. Imprägnat, sprich es werden einzelne Chargen miteinander verglichen.

In einem Beispiel 1 wurde ein bedrucktes Dekorpapier in einem Urea-Melaminharz imprägniert und getrocknet. Vor dem Imprägnieren wurde der Abstand zweier Kreuze, die beidseitig auf das Papier gedruckt wurden, gemessen. Nach dem Imprägnieren wurde der Abstand der Kreuze wiederum gemessen. Das Ergebnis ist in der Tabelle dargestellt.

| Abstand Kreuze Dekorpapier ($K_D$) | Abstand Kreuze Imprägnat ($K_I$) | Abstandsänderung (A) | Abstandsänderung in % (A%) |
|---|---|---|---|
| 2050 mm | 2077 mm | 27 mm | 1,3% |

In einem Beispiel 2 wurde bedrucktes Dekorpapier in einem Urea-Melaminharz imprägniert und getrocknet. Vor dem Imprägnieren wurde der Abstand zweier Kreuze, die beidseitig auf das Dekorpapier gedruckt wurden, gemessen. Nach dem Imprägnieren wurde der Abstand der Kreuze wiederum gemessen. Das Ergebnis ist in der Tabelle dargestellt.

| Abstand Kreuze Dekorpapier ($K_D$) | Abstand Kreuze Imprägnat ($K_I$) | Abstandsänderung (A) | Abstandsänderung in % (A%) |
|---|---|---|---|
| 1950 mm | 1987 mm | 37 mm | 1,9% |

In einem Beispiel 3 wurde bedrucktes Dekorpapier in einem Urea-Melaminharz imprägniert und getrocknet. Vor dem Imprägnieren wurde der Abstand zweier Kreuze, die beidseitig auf das Dekorpapier gedruckt wurden, gemessen. Nach dem Imprägnieren wurde der Abstand der Kreuze wiederum gemessen. Das Ergebnis ist in der Tabelle dargestellt.

| Abstand Kreuze Dekorpapier ($K_D$) | Abstand Kreuze Imprägnat ($K_I$) | Abstandsänderung (A) | Abstandsänderung in % (A%) |
|---|---|---|---|
| 2050 mm | 2083 mm | 33 mm | 1,6% |

In einem Beispiel 4 wurde bedrucktes Dekorpapier in einer Polyurethandispersion imprägniert und getrocknet. Vor dem Imprägnieren wurde der Abstand zweier Kreuze, die beidseitig auf das Dekorpapier gedruckt wurden, gemessen. Nach dem Imprägnieren wurde der Abstand der Kreuze wiederum gemessen. Das Ergebnis ist in der Tabelle dargestellt.

| Abstand Kreuze Dekorpapier ($K_D$) | Abstand Kreuze Imprägnat ($K_I$) | Abstandsänderung (A) | Abstandsänderung in % (A%) |
|---|---|---|---|
| 2050 mm | 2029 mm | -21 mm | -1,0% |

In einem Beispiel 5 wurde bedrucktes Dekorpapier in einer Polyurethandispersion imprägniert und getrocknet. Vor dem Imprägnieren wurde der Abstand zweier Kreuze, die beidseitig auf das Dekorpapier gedruckt wurden, gemessen. Nach dem Imprägnieren wurde der Abstand der Kreuze wiederum gemessen. Das Ergebnis ist in der Tabelle dargestellt.

| Abstand Kreuze Dekorpapier ($K_D$) | Abstand Kreuze Imprägnat ($K_I$) | Abstandsänderung (A) | Abstandsänderung in % (A%) |
|---|---|---|---|
| 1950 mm | 1932 mm | -18 mm | -0,9% |

In einem Beispiel 6 wurde bedrucktes Dekorpapier in einer Polyurethandispersion imprägniert und getrocknet. Vor dem Imprägnieren wurde der Abstand zweier Kreuze, die beidseitig auf das Dekorpapier gedruckt wurden, gemessen. Nach dem Imprägnieren wurde der Abstand der Kreuze wiederum gemessen. Das Ergebnis ist in der Tabelle dargestellt.

| Abstand Kreuze Dekorpapier ($K_D$) | Abstand Kreuze Imprägnat ($K_I$) | Abstandsänderung (A) | Abstandsänderung in % (A%) |
|---|---|---|---|
| 2050 mm | 2028 mm | -22 mm | -1,1% |

Auch hier zeigt sich, dass die mit dem erfindungsgemäßen Verfahren hergestellten Imprägnate nach der Trocknung ein Änderungsprofil von etwa -0,9 bis -1,1 %, vorzugsweise um etwa -1%, erfahren haben.

Wie bereits oben ausgeführt, kommt der Spannweite der Größenänderungswerte unter technischen Gesichtspunkten eine besondere Bedeutung zu. Die Spannweite (englisch: range) R ist das einfachste Streuungsmaß in der Statistik und berechnet sich als Distanz zwischen dem größten und dem kleinsten Messwert.

Die Spannweite der Größenänderung im Hinblick auf die Bahnbreite in Prozent ergibt sich entsprechend wie folgt:

$$R\%_G = G\%_{max} - G\%_{min}$$

Die Spannweite der Größenänderung anhand des Änderungsprofils in Prozent ergibt sich wie folgt:

$$R\%_A = A\%_{max} - A\%_{min}$$

Die Spannweite des Änderungsprofils aus Beispiel 1 bis 3 durch den Vergleich dreier Rollen beträgt somit $R\%_G$ = 1,9% - 1,3% = 0,6%. Die Spannweite des Änderungsprofils aus Beispiel 4 bis 6 durch den Vergleich dreier Rollen mit erfindungsgemäß hergestelltem Imprägnat beträgt somit (-0,9%) - (-1,1%) = 0,2%.

Zur Ermittlung der Spannweite der Größenänderung im Hinblick auf die Bahnbreite wurden drei Rollen untersucht, auf denen erfindungsgemäß hergestelltes Imprägnat aufgewickelt ist. Es konnte festgestellt werden, dass die Spannweite der Größenänderung auch hier in dem Bereich von etwa 0,2% lag.

Durch die Verwendung eines Polyurethans zur Imprägnierung von Dekorpapier 1 wird die Spannweite der Größenänderung, insbesondere im Hinblick auf die Änderung der Bahnbreite, als auch im Hinblick auf das Änderungsprofil im Vergleich zu herkömmlich imprägniertem Dekorpapier minimiert. Es hat sich gezeigt, dass die Spannweite unabhängig von den Maschineneinstellungen und der Papierfertigung ist und die Spannweite der Größenänderung, insbesondere sowohl der Bahnbreitenänderung, als auch des Änderungsprofils, geringer als 0,3%, bevorzugt geringer als 0,2%, besonders bevorzugt geringer als 0,1% ist. Insofern weisen die mittels des erfindungsgemäßen Verfahrens hergestellten bzw. durch die Verwendung von Polyurethan als Imprägnierungsmittel hergestellten Chargen bzw. Rollen von Imprägnaten eine hohe Homogenität hinsichtlich ihrer Größenänderung auf, die sich insbesondere durch die vergleichsweise minimale Spannweite der Größenänderung darstellt.

Ein weiterer durch die Verwendung von Polyurethan zur Imprägnierung von Dekorpapier 1 erzielbarer technischer Effekt liegt in einer höheren Elastizität des Imprägnats, z.B. beim Biegen, im Vergleich zu herkömmlichen Imprägnaten. Es kommt insbesondere nicht zu einem Aufbrechen von Papierfasern. Auch sehr tiefe Strukturen können in die Imprägnate 4 gepresst werden.

Ein getrocknetes Imprägnat kann beispielsweise mit einem Biegeradius von kleiner 5cm, insbesondere kleiner 1cm und weiter vorzugsweise kleiner 2,5mm aufgewickelt werden. Im Vergleich hierzu sind herkömmliche Imprägnate äußerst spröde und haben Biegradien beim Aufwickeln von typisch > 10cm.

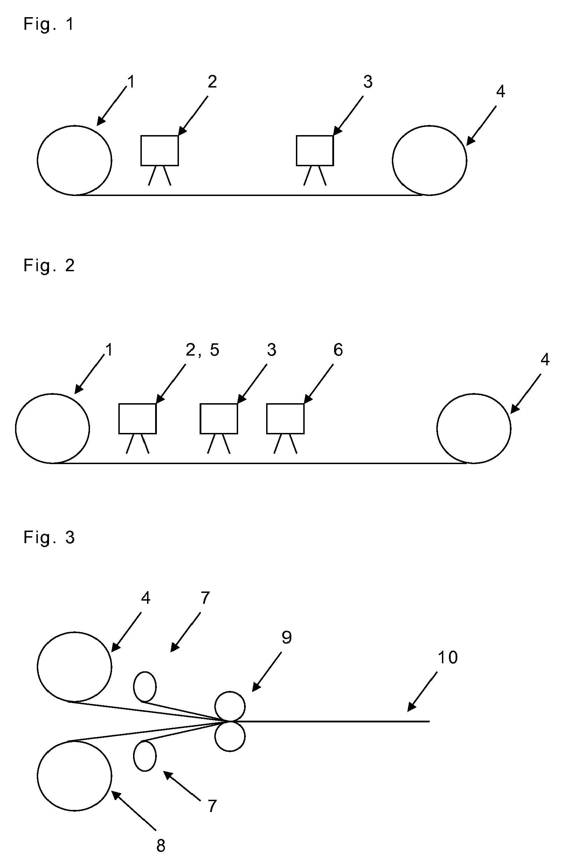

Die Herstellung des Imprägnats aus dem Dekorpapier geschieht im Wesentlichen nach den aus dem Stand der Technik bekannten Verfahrensschritten bzw. Gerätschaften, wobei jedoch als Imprägnierungsmittel ein Polyurethan, insbesondere eine aliphatische polykarbonalthaltige Polyurethandispersion, verwendet wird. Das Imprägnierungsmittel wird vorzugsweise in flüssiger Form in einer Auftragsvorrichtung 2 für Imprägniermittel auf das Dekorpapier 1 aufgetragen. Das Dekorpapier 1 kann als Streifen beispielsweise unmittelbar hergestellt oder von einer Rolle abgerollt werden. In einer Trocknungseinheit 3 wird das mit dem Imprägnierungsmittel versehene Dekorpapier, sprich das Imprägnat 4 getrocknet. Anschließend kann das Imprägnat 4 wieder auf einer Rolle aufgerollt oder entsprechend gleich weiterverarbeitet werden. Schematisch ist dieses Vorgehen in der Fig. 1 dargestellt. Das Imprägnat kann auch in einzelne Blätter aufgeteilt und weiterverarbeitet werden.

Die Imprägnate sind vorzugsweise bereits vor der Imprägnierung bedruckt oder werden unbedruckt weiterverarbeitet. Dies unterscheidet sie insbesondere von Vorimprägnaten.

Es kann vorgesehen sein, dass das Dekorpapier 1 während der Imprägnierung zusätzlich mit Korund, beispielsweise mit Hilfe einer Auftragsvorrichtung 5, beaufschlagt wird. Hierdurch kann die Abriebfestigkeit erhöht werden, wodurch wiederum das hergestellte Imprägnat insbesondere als Imprägnatfilm zur Herstellung von Laminatfußböden geeignet ist.

Es kann ferner vorgesehen sein, dass auf das Imprägnat ein Lack aufgetragen wird, sprich das Imprägnat mit einem Lack geschützt wird. Dies kann beispielsweise mit einer entsprechenden Auftragsvorrichtung 6 für Lack vorgenommen werden. Es kommen Polyurethanlacke, elektronenstrahlhärtende Lacke und säurehärtende Lacke in Frage. Die Lacke können weitere Gebrauchseigenschaften dem Imprägnat mitgegeben, wie eine Anti-Fingerabdruckeigenschaft.

Die Imprägnate können wie gewöhnliche Imprägnate für die Holzwerkstoffindustrie verwendet werden. So kann aus dem erfindungsgemäß hergestellten Imprägnat 4 beispielsweise ein Verbundwerkstoff 10 hergestellt werden. Beispielsweise kann das flächige Imprägnat 4 mit einem flächigen Träger 8, wie beispielsweise einem Phenolharzkern, einer Spanplatte oder einem anderen geeigneten Trägermaterial, in einer Presse 9 verpresst werden. Der Verbundwerkstoff 10 kann entsprechend vereinzelt werden oder wieder auf einer Rolle aufgewickelt werden. Das Pressen kann auch stückweise stattfinden, beispielsweise in einer Hubpresse. Es entsteht ein Verbundwerkstoff 10, der beispielsweise Anwendung in der Möbelindustrie findet, beispielsweise als Paneele, Tischplatten, etc, oder auch in der Fußbodenindustrie, beispielsweise als Bodenbelag, Laminat, etc.

Auch kann auf das Imprägnat ein Overlaypapier aufgelegt werden. Hier kommt eine Auftragsvorrichtung 7 für Overlaypapier in Frage.

Gemäß dem Stand der Technik sind Biegeradien von 2,5 mm mit herkömmlichen verpressten Imprägnaten bzw. Verbundwerkstoffen möglich. In diesem Zusammenhang hat sich vorteilhafterweise gezeigt, dass die mit dem erfindungsgemäßen Verfahren hergestellten Verbundwerkstoffe einen Biegradius von kleiner 2mm, insbesondere kleiner 1 mm, weiter vorzugsweise kleiner 0,5mm zulassen. Das Verpressen des erfindungsgemäß hergestellten Imprägnats, z. B. mit Phenolharzkernen, erfolgt nach dem dem Fachmann bekannten Stand der Technik. Die in Frage kommenden Verfahren heißen beispielsweise HPL für High Pressure Laminate oder CPL für Continuous Pressure Laminate. Diese Laminate bzw. Verbundwerkstoffe werden dann beispielsweise auf eine Küchenarbeitsplatte, eine Tischplatte oder ein Türblatt geklebt.

## Patentansprüche

1. Verfahren zur Herstellung eines Imprägnats (4) mit einer minimalen Spannweite der Größenänderung aus einem Dekorpapier (1), **dadurch gekennzeichnet, dass** das Dekorpapier (1) mit einem Polyurethan als Imprägnierungsmittel imprägniert wird.

2. Verfahren nach Anspruch 1, **dadurch gekennzeichnet, dass** die Spannweite der Größenänderung des Imprägnats (4) geringer als 0,3%, bevorzugt geringer als 0,2%, besonders bevorzugt geringer als 0,1% ist.

3. Verfahren nach mindestens einem der vorhergehenden Ansprüche, **dadurch gekennzeichnet, dass** die Größenänderung des Imprägnats als Schrumpfung der Bahnbreite des Dekorpapiers ausgebildet ist, wobei die Schrumpfung maximal zwischen -0,9 und -1,1% beträgt.

4. Verfahren nach mindestens einem der vorhergehenden Ansprüche, **dadurch gekennzeichnet, dass** die Größenänderung als Änderungsprofil des Dekorpapiers ausgebildet ist, wobei das Änderungsprofil zwischen -0,9 und -1,1% beträgt.

5. Verfahren zur Herstellung eines Imprägnats (4) mit einer verbesserten Elastizität aus einem Dekorpapier (1), **dadurch gekennzeichnet, dass** das Dekorpapier (1) mit einem Polyurethan als Imprägnierungsmittel imprägniert wird.

6. Verfahren nach Anspruch 5, **dadurch gekennzeichnet, dass** das Imprägnat dazu eingerichtet ist, mit einem Biegeradius von kleiner 5cm, insbesondere kleiner 1 cm und weiter vorzugsweise kleiner 2,5mm aufgewickelt zu werden.

7. Verfahren nach mindestens einem der vorhergehenden Ansprüche, **dadurch gekennzeichnet, dass** eine aliphatische polykarbonalthaltige Polyurethandispersion als Imprägnierungsmittel verwendet wird.

8. Verfahren nach mindestens einem der vorhergehenden Ansprüche, **dadurch gekennzeichnet, dass** das Dekorpapier (1) während der Imprägnierung mit Korund beaufschlagt wird.

9. Verfahren nach mindestens einem der vorhergehenden Ansprüche, **dadurch gekennzeichnet, dass** das Imprägnat (4) mit einem Lack, insbesondere einem Polyuhrethanlack, einem elektronenstrahlhärtenden Lack und/oder einem säurehärtenden Lack, beaufschlagt wird.

10. Verfahren zur Herstellung eines Verbundwerkstoffs (10), insbesondere für die Außenanwendung, **dadurch gekennzeichnet, dass** die gemäß mindestens einem der Ansprüche 1 bis 9 hergestellten Imprägnate (4) mit einem Träger (8), beispielsweise einem Phenolharzkern, verpresst werden.

11. Verwendung eines Polyurethans als Imprägnierungsmittel für die Imprägnierung eines Dekorpapiers (1) zur Minimierung der Spannweite der Größenänderung des Imprägnats (4).

12. Verwendung eines Polyurethans als Imprägnierungsmittel für die Imprägnierung eines Dekorpapiers (1) zur Verbesserung der Elastizität des Imprägnats (4).

**13.** Verwendung nach mindestens einem der vorhergehenden Ansprüche, **dadurch gekennzeichnet, dass** eine aliphatische polykarbonalthaltige Polyurethandispersion als Polyurethan verwendet wird.

Fig. 1

Fig. 2

Fig. 3

Fig. 4

$B_D$

1

$B_I$

4

Fig. 5

**Europäisches Patentamt**
**European Patent Office**
**Office européen des brevets**

# EUROPÄISCHER RECHERCHENBERICHT

Nummer der Anmeldung

EP 15 19 4305

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 2 907 655 A1 (WPT GMBH [DE]) 19. August 2015 (2015-08-19) * Absätze [0009], [0030]; Ansprüche * ----- | 1-7 | INV. D21H27/26 D21H17/54 D21H17/56 |
| X | WO 2010/089086 A1 (OKT GERMANY GMBH [DE]; SUUR-NUUJA KIMMO [DE]; KLEINERUESSKAMP HEINZ [D] 12. August 2010 (2010-08-12) * Seite 2, Zeile 19 - Seite 3, Zeile 3 * * Seite 8, Zeile 25 - Seite 9, Zeile 4 * * Seite 10, Zeile 1 - Zeile 8 * * Seite 11, Zeile 5 - Zeile 35 * ----- | 1-9, 11-13 | |
| X | DE 10 2010 035436 A1 (INTERPRINT GMBH [DE]) 1. März 2012 (2012-03-01) * Absätze [0004], [0009], [0012], [0014], [0018], [0019], [0021], [0045] - [0048]; Ansprüche * ----- | 1,5,7,10 | |

| RECHERCHIERTE SACHGEBIETE (IPC) |
|---|
| D21H B32B |

Der vorliegende Recherchenbericht wurde für alle Patentansprüche erstellt

| Recherchenort | Abschlußdatum der Recherche | Prüfer |
|---|---|---|
| München | 28. April 2016 | Koegler-Hoffmann, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 4305

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2016

| Im Recherchenbericht angeführtes Patentdokument | Datum der Veröffentlichung | Mitglied(er) der Patentfamilie | | Datum der Veröffentlichung |
|---|---|---|---|---|
| EP 2907655 A1 | 19-08-2015 | DK | 2755818 T3 | 20-04-2015 |
| | | EP | 2755818 A1 | 23-07-2014 |
| | | EP | 2907655 A1 | 19-08-2015 |
| | | ES | 2536326 T3 | 22-05-2015 |
| | | JP | 5898769 B2 | 06-04-2016 |
| | | JP | 2014527131 A | 09-10-2014 |
| | | PT | 2755818 E | 22-07-2015 |
| | | US | 2014255659 A1 | 11-09-2014 |
| | | WO | 2013064160 A1 | 10-05-2013 |
| WO 2010089086 A1 | 12-08-2010 | BR | PI1008225 A2 | 08-03-2016 |
| | | DE | 102009007544 B3 | 12-08-2010 |
| | | EP | 2393670 A1 | 14-12-2011 |
| | | RU | 2011136712 A | 10-03-2013 |
| | | US | 2011300351 A1 | 08-12-2011 |
| | | WO | 2010089086 A1 | 12-08-2010 |
| DE 102010035436 A1 | 01-03-2012 | DE | 102010035436 A1 | 01-03-2012 |
| | | EP | 2609251 A1 | 03-07-2013 |
| | | WO | 2012025537 A1 | 01-03-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2907655 A1